# FASCICULE DE BREVET EUROPEEN

(11) **EP 3 533 202 B1**
(45) Date de publication et mention de la délivrance du brevet: **01.09.2021**
(21) Numéro de dépôt: 17804604.1
(22) Date de dépôt: 24.10.2017
(51) Int. Cl.: H04L 29/06

(54) **CONTROLE DYNAMIQUE ET INTERACTIF D'UNE PASSERELLE RESIDENTIELLE CONNECTEE A UN RESEAU DE COMMUNICATION**
DYNAMISCHE UND INTERAKTIVE STEUERUNG EINES MIT EINEM KOMMUNIKATIONSNETZ VERBUNDENEN RESIDENTIAL-GATEWAYS
DYNAMIC AND INTERACTIVE CONTROL OF A RESIDENTIAL GATEWAY CONNECTED TO A COMMUNICATION NETWORK

(30) Priorité: 26.10.2016 FR 1660397
(43) Date de publication de la demande: 04.09.2019
(73) Titulaire: ORANGE, 92130 Issy-les-Moulineaux (FR)
(72) Inventeur: BOUCADAIR, Mohamed, 92326 Châtillon Cedex (FR); JACQUENET, Christian, 92326 Châtillon Cedex (FR)
(86) Numéro de dépôt international: PCT/FR2017/052935
(87) Numéro de publication internationale: WO 2018/078279

(56) Documents cités:
- EP-A1- 2 485 456
- WO-A1-2005/062545
- WO-A1-2012/166194
- WO-A2-03/039053

## Description

### Domaine de l'invention

Le domaine de l'invention est celui des télécommunications et plus particulièrement celui de la préservation de la continuité des services de communication en cas d'événements (attaques) de nature à affecter l'accès d'un client à un réseau de télécommunication et aux services auxquels le client a souscrit depuis une passerelle résidentielle.

L'invention trouve donc des applications dans tout réseau de communication mettant en œuvre au moins une passerelle résidentielle (domestique ou d'entreprise).

### Art antérieur

Le réseau IP (« Internet Protocol ») est le support universel d'une multitude de services et applications.

WO 2012/166194-A1 décrit un procédé de collecte de données représentatives de l'activité d'actifs du réseau où un flux conforme à un gabarit de filtrage déclenche l'envoi d'une notification d'alarme. WO 2005/062545-A1 décrit un mécanisme MobileIP modifié compatible d'un environnement IPsec.

Pour accéder à ces services ou applications, une passerelle résidentielle, encore appelée « box », HG pour « Home Gateway » ou CPE pour « Customer Premises Equipment », est classiquement installée chez un utilisateur. En d'autres termes, une passerelle résidentielle sert d'interface entre le réseau local de l'utilisateur et le réseau IP d'un opérateur. C'est donc l'élément concentrateur par lequel transite l'ensemble des connexions, le trafic caractéristique des différents services souscrits par l'utilisateur, et qui supporte également un ensemble d'applications fournies par un opérateur de télécommunications.

Par exemple, une passerelle résidentielle permet à un utilisateur d'accéder à de multiples services IP permettant simultanément un accès à Internet, à des contenus vidéo (dont la diffusion de programmes télévisés) et à des services de voix (téléphonie sur IP). L'offre commerciale correspondante est classiquement dite Triple Play.

En matière de connectivité, la passerelle résidentielle est raccordée d'un côté au réseau de l'opérateur et fournit côté client un ensemble d'interfaces variées : interface sans fil (par ex. WLAN, Bluetooth (marque déposée), etc.), prise RJ11 pour la téléphonie, prises RJ45 pour la télévision numérique et les ordinateurs, prises USB (Universal Serial Bus), port Ethernet.

Outre la fourniture de l'accès à l'ensemble des services (data, vidéo, voix) souscrits par le client, la passerelle résidentielle est également impliquée dans la gestion des fonctions qu'elle supporte (par exemple gestion des règles de translation d'adresses NAT (Network Address Translater), des filtres du pare-feu, etc.).

En matière d'applicatifs, la passerelle résidentielle intègre les logiciels utilisées pour les opérations de maintenance de la passerelle.

Depuis quelques années, les passerelles résidentielles sont devenues la cible d'attaques exploitant des failles de sécurité.

Certaines passerelles sont infestées par des logiciels malveillants et utilisées à l'insu des clients/utilisateurs pour mettre en place des attaques DDoS (Distributed Denial of Service) à grande échelle. L'implication de passerelles dans des attaques de déni de service a une incidence négative sur la réputation des blocs d'adresses IP du fournisseur d'accès, c'est-à-dire que ces adresses ont une mauvaise réputation lorsque qu'une activité suspecte liée à leur usage est détectée.

Aussi, certaines failles de sécurité peuvent être exploitées pour le contrôle d'objets connectés (système d'éclairage, par exemple).

Le fournisseur d'accès n'a pas toujours la capacité de maîtriser toutes ces différentes attaques ce qui peut provoquer un accroissement des appels au service après-vente en cas de dysfonctionnement constaté. Ces attaques peuvent alors entrainer une dégradation de la qualité d'expérience et une dégradation de l'image de marque.

Etant donné que la passerelle est un point de passage obligé pour l'ensemble du trafic émis par les ou à destination des utilisateurs, des attaques peuvent être menées sur cet équipement pour intercepter des données sensibles telles que les données bancaires. Une attaque emblématique consiste à modifier la configuration du/des serveur(s) DNS (*Domain Name System*) de la passerelle.

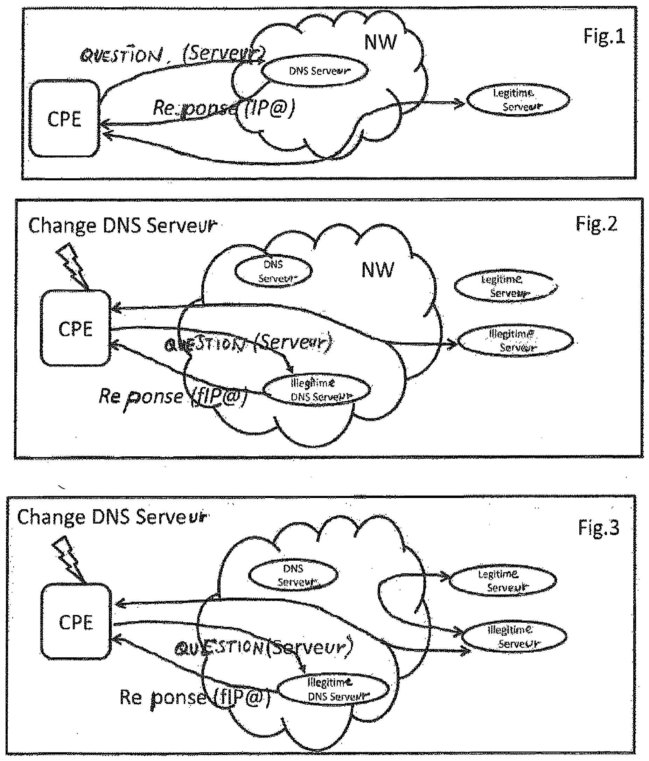

A titre d'exemple illustré par la figure 1, considérons une passerelle CPE dont la configuration n'est pas corrompue, c'est-à-dire qu'elle renseigne en particulier une liste de serveurs DNS « légitimes ». Typiquement, quand un terminal connecté à la passerelle CPE veut joindre un serveur identifié par un nom de domaine, une requête de résolution DNS est relayée par la passerelle CPE vers au moins un de ces serveurs DNS préconfigurés. Une connexion est alors établie en utilisant la ou les adresses IP retournées par le serveur DNS. Tous les éléments qui interviennent entre le réseau client et le serveur pour acheminer les données sont des éléments de confiance. En supposant qu'un attaquant veut capter le trafic d'un utilisateur et ainsi intercepter certaines de ses données, il peut réaliser l'attaque illustrée par la figure 2. Cette attaque consiste à fournir une adresse IP d'un serveur utilisé par l'attaquant en lieu et place d'une adresse IP du serveur de contenu auquel le client souhaitait initialement accéder. Pour ce faire, il suffit de modifier la configuration de la passerelle CPE pour envoyer les requêtes DNS vers un serveur DNS de l'attaquant. Toutes les connexions qui nécessitent des échanges DNS sont ainsi interceptées par le serveur DNS de l'attaquant qui, par conséquent, peut rediriger le trafic du client vers des serveurs dédiés qui émulent certains sites (par exemple, un compte bancaire).

Une très grande majorité de clients n'a pas l'habitude de contrôler l'identité des serveurs DNS (configurés dans le CPE) qu'ils sollicitent à chaque fois qu'ils souhaitent accéder à un serveur localisé quelque part sur l'Internet. Pire, ces clients ne connaissent même pas le rôle et a fortiori le fonctionnement des serveurs DNS qui contribuent à la fourniture du service de transfert IP.

L'attaquant peut aussi décider de rediriger, après interception, les requêtes de l'utilisateur vers le serveur « légitime » pour éviter que le client ne s'aperçoive de l'attaque comme illustré par la figure 3.

L'installation et la gestion de la passerelle résidentielle pour l'accès aux services d'accès à Internet ainsi qu'aux services de téléphonie et de télévision notamment sont classiquement effectuées par l'utilisateur puisque la passerelle résidentielle est installée chez l'utilisateur.

Toutefois, les utilisateurs voient souvent cette passerelle comme une boîte noire dont ils méconnaissent les capacités et le fonctionnement malgré une utilisation quotidienne. Ainsi, l'interface d'administration de la passerelle souvent accessible via le protocole HTTP (HyperText Transfer Protocol) est peu connue de la plupart des utilisateurs. Les clients du marché grand public n'ont pas toujours les compétences, ni les connaissances suffisantes pour pouvoir gérer directement les fonctions offertes via une interface de gestion de la passerelle résidentielle et ainsi configurer certains paramètres. En outre, les modes de gestion actuels de la passerelle supposent que le client est directement connecté à la passerelle.

Il existe donc un besoin pour une nouvelle technique permettant de lutter contre des attaques impactant le fonctionnement d'une passerelle résidentielle.

### Exposé de l'invention

L'invention a pour objet un procédé de contrôle dynamique et interactif d'une passerelle résidentielle connectée à un réseau de communication. Le procédé est défini par l'objet des revendications 1 à 6 jointes à la description.

Le filtrage peut être configuré en usine ou lors de l'installation de la passerelle résidentielle et éventuellement modifié ultérieurement soit à distance, soit depuis une interface locale de la passerelle, soit depuis un compte utilisateur. Le filtrage des flux entrants et sortants peut être effectué localement par la passerelle et/ou de manière distante par une ou plusieurs entités du réseau de communication. En particulier, le filtrage est effectué par un équipement d'accès au réseau (par exemple un BRAS) du fournisseur d'accès au réseau Internet, ce fournisseur pouvant être celui qui commercialise et exploite la passerelle résidentielle. La configuration associée au filtrage comprend l'identification d'au moins une adresse de contact (la première adresse) vers laquelle sont transmises les notifications. Cette adresse de contact doit faire partie des adresses de contact déclarées par un client connu du compte utilisateur. Ainsi, l'adresse de contact peut être un numéro MSISDN (Mobile Station International Subscriber Directory Number), un numéro de téléphone associé à une ligne fixe, une adresse d'enregistrement d'une session (AoR (Address of Record) Session Initiation Protocol (SIP)) tel qu'un identifiant de ressource URI (Uniform Ressource Identifier).

La configuration du gabarit de filtrage peut consister à lister des événements considérés comme suspects et correspondant à certains flux de trafic tels que : une mise à jour du logiciel de la passerelle résidentielle, une demande de modification d'un serveur DNS, d'un serveur dynamique DNS dynDNS ou d'un serveur NTP (Network Time Protocol), une activation d'un serveur FTP (File Transfer Protocol), une modification d'une règle du pare-feu embarqué dans la passerelle résidentielle, l'attachement d'un nouveau terminal à la passerelle, un trafic non conforme à un profil nominal (par exemple l'envoi de paquets UDP (User Datagram Protocol) depuis le réseau Internet vers un port connu pour être suspect (port « 0 », port « 443 », etc.), l'envoi de messages vers une adresse hors du réseau local depuis des objets connectés à un réseau, etc.). La configuration peut ainsi correspondre à un profil « anormal » de trafic. Un des objectifs du filtrage est de détecter une redirection illégitime du trafic.

Le filtrage permet ainsi de détecter une utilisation de la passerelle résidentielle a priori suspecte.

Lorsque les flux entrants ou sortants présentent une particularité qui correspond au gabarit de filtrage tel que configuré, il y a génération d'une notification à destination de l'adresse de contact déclarée. Si cette adresse est un numéro MSISDN, la notification peut être transmise dans le cas où une intervention urgente est souhaitable via un appel téléphonique selon un mode de transmission de la voix sur réseau de type LTE (Long Term Evolution) avec un codage dit voix sur IP (VoIP). Dans d'autres cas, la notification peut être transmise via le service SMS/MMS (Short Message Service/Multimedia Messaging Service). Ce mode de notification par SMS/MMS a l'avantage de bénéficier de la fiabilité reconnue du service SMS et de son utilisation très répandue. En outre, un tel mode permet un déploiement avec une infrastructure de réseau fixe éventuellement étendue à un ou plusieurs réseaux d'accès mobile. Selon d'autres modes, la notification consiste à envoyer un message SIMPLE (SIP for instant Messaging and Presence Leveraging Extensions).

La notification répond à un certain format. Selon un mode de réalisation, le format comprend un « intitulé de l'événement détecté » avec éventuellement un « niveau de risque », un choix «oui/non » de décision pour une action, une liste d'actions «confirmer/infirmer/bloquer/autoriser/... /déconnexion ou pas d'un objet connecté à la passerelle» en relation avec l'événement détecté.

Le destinataire doit retourner une décision. Le destinataire est soit le client via une adresse de contact qui correspond par exemple à un numéro de téléphone soit une entité localisée dans la passerelle ou dans un ou plusieurs nœuds du réseau. Cette entité est alors configurée avec des préférences de l'utilisateur concernant plus particulièrement ses connexions Internet, les sites Web qu'ils consultent.

Eventuellement, le procédé réitère l'envoi de la notification jusqu'à réception d'une décision.

Toute mesure corrective ordonnée par le procédé est conditionnée à la réception d'une décision envoyée depuis une deuxième adresse de contact associée à la passerelle éventuellement identique à la première adresse.

Compte tenu en particulier des fonctions d'acheminement et de routage de trafic, des fonctions de classification et d'ordonnancement de trafic qui peuvent être déployées de différentes manières, la participation de l'utilisateur dans la prise de décision sur le caractère anormal détecté permet d'augmenter l'efficacité de la distinction faite au final entre trafic légitime et trafic illégitime. Par conséquent la mesure corrective est ainsi utilisée à meilleur escient.

En outre la participation de l'utilisateur permet de le sensibiliser de façon transparente à des failles sécuritaires et de l'inciter à appliquer des mesures de sécurité. Ceci tend à renforcer la robustesse du réseau de l'opérateur et de la réputation des adresses IP qui lui sont associées. L'implication de l'utilisateur permet de minimiser le risque d'une décision unilatérale de l'opérateur de lancer une mesure corrective affectant le fonctionnement d'un service alors que ce fonctionnement était satisfaisant pour l'utilisateur.

L'invention a en outre pour objet un système comprenant un réseau de communication et une passerelle résidentielle connectée au réseau pour le contrôle dynamique et interactif de la passerelle. Le système est défini par l'objet des revendications 8 et 9 jointes à la description.

L'invention a en outre pour objet une passerelle résidentielle qui est définie par l'objet de la revendication 7 jointe à la description.

Selon un mode de réalisation de l'invention, l'envoi d'une notification est effectué vers plusieurs adresses de contact associées à la passerelle.

Selon un premier mode l'envoi de notifications vers plusieurs adresses de contact est effectué de manière séquentielle. Lorsqu'aucune décision n'a été reçue de la première adresse de contact dans un laps de temps déterminé depuis l'envoi de la notification ou après un certain nombre d'envois sans réponse, le procédé envoie la notification vers une deuxième adresse de contact. Selon ce mode, la deuxième adresse de contact peut être différente de la première adresse de contact et la décision est attendue de la deuxième adresse de contact. Eventuellement, le procédé réitère autant que nécessaire l'envoi de notifications vers une adresse de contact jusqu'à réception d'une décision.

Selon un deuxième mode, l'envoi de notifications vers plusieurs adresses de contact est effectué en parallèle. Selon une réalisation particulièrement simple, la première décision reçue depuis l'une des adresses de contact actionne la mesure corrective de la configuration de la passerelle résidentielle.

Selon un mode de réalisation de l'invention, l'attente est temporisée et après un temps déterminé le procédé comprend :
- actionner une mesure corrective d'une configuration de la passerelle résidentielle en fonction du flux non conforme détecté.

Selon ce mode, le procédé prend une décision après la fin de la temporisation. Ainsi, en l'absence de retour depuis l'adresse de contact dans le temps déterminé, le procédé décide d'une action corrective lorsqu'un flux non conforme a été détecté. Par exemple, la détection de messages ICMPv6 (Internet Control Message Protocol, version 6) émis sur n'importe quel numéro de port compris entre 5 et 99 dans les flux entrants ou sortants conduit à une décision de mise à jour de la configuration du pare-feu de la passerelle résidentielle pour que ce pare-feu filtre ces messages dans les meilleurs délais.

Selon un mode de réalisation de l'invention, le procédé comprend en outre : activation ou désactivation de l'envoi de la notification sous contrôle d'une entrée d'un utilisateur authentifié.

Le client peut ainsi activer ou désactiver toute action de notification et de correction même si le filtrage est actif. Pour éviter une activation ou une désactivation frauduleuse, seul le client authentifié a accès à cette fonction d'activation et de désactivation.

Selon un mode de réalisation de l'invention, la configuration du filtrage et l'envoi des notifications sont mis en œuvre avec des commandes temps réel.

Ces commandes appartiennent par exemple à la technologie USSD (Unstructured Supplementary Service Data). Ce type de technologie a l'avantage de s'affranchir d'une connexion directe à la passerelle résidentielle. En outre, elles permettent une mise en œuvre du procédé avec un temps de réaction court.

Selon un mode de réalisation de l'invention, l'envoi de notification est effectué avec un ou plusieurs messages courts dits SMS ou MMS.

Ce mode n'impose pas de changement notable des habitudes de l'utilisateur compte tenu de la popularité du service SMS/MMS.

Une passerelle résidentielle selon l'invention est notamment adaptée à mettre en œuvre le procédé tel que décrit précédemment. Ainsi, une telle passerelle peut présenter les différentes caractéristiques relatives au procédé selon l'invention, ces caractéristiques pouvant être combinées ou prises isolément.

L'invention a en outre pour objet un ou plusieurs programmes d'ordinateur comportant des instructions pour la mise en œuvre d'au moins un procédé tel que défini par l'objet des revendications 1 à 6 jointes à la description.

L'invention a en outre pour objet un ou plusieurs supports d'informations, inamovibles, ou partiellement ou totalement amovibles, lisibles par un ordinateur, et comportant des instructions d'un ou plusieurs programmes d'ordinateur pour l'exécution des étapes d'au moins un procédé tel que décrit ci-dessus.

Les procédés selon l'invention peuvent donc être mis en œuvre de diverses manières, notamment sous forme câblée et/ou sous forme logicielle.

### Liste des figures

D'autres caractéristiques et avantages de l'invention apparaîtront plus clairement à la lecture de la description suivante de modes de réalisation particuliers donnés à titre de simples exemples illustratifs et non limitatifs et des dessins annexés, parmi lesquels :
- la figure 1 est un schéma illustrant une passerelle résidentielle non corrompue connectée à un réseau de communication renseignant des serveurs légitimes,
- la figure 2 est un schéma illustrant une attaque de la passerelle de la figure 1 visant à capter le trafic d'un utilisateur de la passerelle,
- la figure 3 est un schéma illustrant la redirection des requêtes de l'utilisateur vers un serveur « légitime » suite à l'attaque illustrée par la figure 2 de la passerelle de la figure 1 visant à capter le trafic d'un utilisateur de la passerelle,
- la figure 4 est un organigramme des principales étapes d'un procédé selon l'invention,
- la figure 5 est un schéma illustrant une mise en œuvre particulière du procédé selon l'invention utilisant la technologie SMS (Short Message Service) et selon laquelle la passerelle embarque la plateforme ECIMP (Enhanced CPE Interactive Management Platform),
- la figure 6 est un schéma illustrant une mise en œuvre particulière de l'invention selon laquelle la plateforme ECIMP est embarquée dans des serveurs de l'opérateur réseau avec détection d'un flux suspect par la passerelle,
- la figure 7 est un schéma illustrant la détection d'un flux suspect par la plateforme ECIMP dans le cas d'une mise en œuvre selon laquelle la plateforme ECIMP est embarquée dans des serveurs du réseau de l'opérateur,
- la figure 8 est un schéma illustrant un mode de réalisation du procédé selon lequel la plateforme ECIMP notifie séquentiellement une autre adresse de contact si aucun retour n'a été reçu de l'adresse de contact précédente,
- la figure 9 est un schéma illustrant un mode de réalisation du procédé selon lequel la plateforme ECIMP notifie en parallèle plusieurs adresses de contact,
- la figure 10 est un schéma illustrant un mode de réalisation du procédé selon lequel une clé de sécurité doit être utilisée dans les échanges avec le client,
- la figure 11 est un schéma illustrant un mode de réalisation du procédé selon lequel l'échange avec le client est établi au moyen d'une communication média en mode synchrone,
- la figure 12 est un schéma illustrant un exemple selon lequel le procédé permet de détecter une attaque visant à détourner les flux d'un client et permet de lancer une mesure corrective par la passerelle en riposte à cette attaque,
- la figure 13 est un schéma illustrant un exemple selon lequel le procédé permet de détecter une tentative d'intrusion à partir d'un terminal client et permet de lancer une mesure corrective par la passerelle en riposte consistant par exemple à déconnecter le terminal intrus,
- la figure 14 est un schéma de la structure simplifiée d'une passerelle résidentielle selon l'invention adaptée à mettre en œuvre un procédé de contrôle de la passerelle selon l'invention.

### Description de modes de réalisation de l'invention

Le principe général de l'invention repose sur la sollicitation de l'utilisateur avant toute mesure correctrice de sa passerelle résidentielle suite, par exemple, à la détection d'un flux lié à sa passerelle conforme à un gabarit de filtrage.

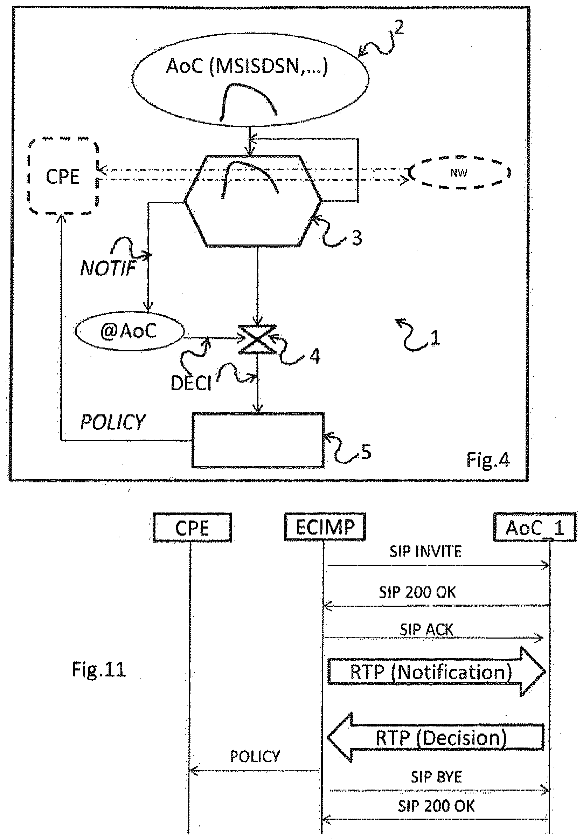

Les principales étapes de l'invention sont illustrées par le schéma de la figure 4. Selon le procédé 1, le client doit déclarer 2 au moins une adresse de contact (identifiant) AoC (Address of Contact). Le client seul ou le client et l'opérateur de la passerelle résidentielle configurent 2 un gabarit de filtrage des flux de la passerelle. La passerelle ou la passerelle et le réseau filtrent 3 les flux de la passerelle CPE. Si un événement/un flux conforme au gabarit est détecté alors une notification *NOTIF* est adressée à l'adresse de contact AoC. Le procédé se met en attente 4 d'une décision *DECI* du client avant de lancer 5 une mesure correctrice *POLICY* de la passerelle CPE.

Le filtrage intervient aussi bien sur les flux entrants que sur les flux sortants de la passerelle. L'utilisateur intervient soit en temps réel (« live ») soit de manière anticipée en ayant renseigné ses préférences (ou profil) pour qu'une décision sur l'action à entreprendre puisse être prise quasi immédiatement après la sollicitation du client suite à la détection d'un flux a priori suspect.

Pour renseigner ses préférences l'utilisateur a accès à une interface de notification et de prise de décision. Cette interface peut être l'interface de gestion de la passerelle qui est généralement un serveur Web local ou une interface dédiée. Cette interface dédiée est accessible via un réseau de confiance ou relayée par le fournisseur de connectivité (i.e. fournisseur d'accès). Cette interface est simple, ne requiert pas de connaissance technique particulière ni de terminal dédié pour se raccorder à la passerelle.

L'invention est associée à une plateforme dite ECIMP (*Enhanced CPE Interactive Management Platform*)*,* c'est-à-dire une entité logique, qui est fonctionnellement responsable de la réception des notifications envoyées par le CPE et de la réponse à ces notifications, ainsi que du processus de prise de décision. Cette plateforme ne fait appel à aucune structure d'appareil particulière, ni à aucune architecture réseau particulière. L'entité ECIMP peut être décomposée en plusieurs fonctions élémentaires qui peuvent être hébergées par un même nœud du réseau ou être distribuées sur plusieurs nœuds du réseau ou virtualisées au sein d'une infrastructure « cloud ».

L'invention s'applique à tous les modèles de déploiement reposant sur une passerelle résidentielle ; du modèle couramment mis en œuvre par les opérateurs selon lequel la passerelle embarque des fonctions L3 à tout modèle alternatif qui consiste à décharger la passerelle de certaines fonctions L3 pour les héberger dans le réseau de l'opérateur. Aucune hypothèse n'est faite sur les différentes technologies mises en œuvre par la passerelle ni sur la manière d'implémenter et d'activer des fonctions caractéristiques de la passerelle (par ex. les fonctions d'acheminement et de routage de trafic, les fonctions de classification et d'ordonnancement de trafic, etc.), que ces fonctions soient physiquement embarquées dans la passerelle déployée sur le site client ou virtualisées au sein d'une infrastructure « cloud ».

L'invention est décrite de manière plus détaillée ci-après.

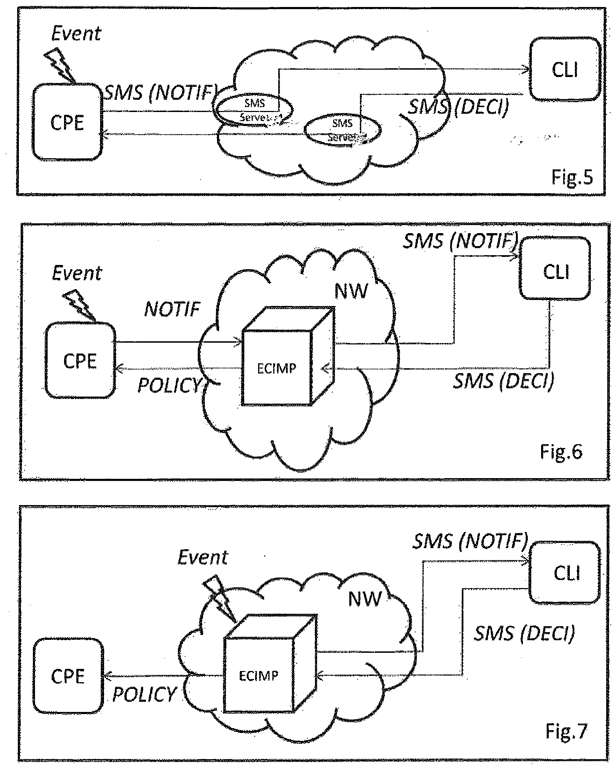

Selon un mode de réalisation illustré par la figure 5, l'implémentation repose sur la technologie SMS (*Short Message Service*)/*MMS* (*Multimedia Messaging Service*). Le service SMS est un service réputé fiable et largement démocratisé. Il n'impose pas de contrainte aux terminaux utilisés par les clients ni aux habitudes d'usage d'applications de ces clients. Le service SMS peut par ailleurs être déployé sur une infrastructure fixe ou mobile. Ainsi, aucune hypothèse particulière n'est faite sur la nature de l'infrastructure réseau (fixe ou mobile) utilisée par l'invention, ni sur la nature de l'infrastructure d'accès à laquelle la passerelle est connectée (cuivre, fibre, mobile).

La déclaration d'adresse(s) de contact doit être fiable. L'adresse de contact doit être configurée par le client. Une adresse de contact pointe sur un identifiant unique pour pouvoir solliciter en temps réel un client ou les préférences qu'il a enregistrées. Une ou plusieurs adresses de contact (AoC) peuvent être configurées par le client, typiquement les numéros MSISDN (*Mobile Station ISDN Number*) ou des adresses définies selon le format décrit dans la norme E.164 de l'UIT (Union Internationale des Télécommunications) d'un couple partageant la passerelle résidentielle dans une même résidence ou le numéro MSISDN du client et celui de la ligne fixe de la résidence. Selon un mode de réalisation, une même adresse de contact est associée à la gestion de plusieurs passerelles. En effet, certains clients peuvent déléguer la gestion de leur passerelle à d'autres personnes. C'est typiquement le cas de parents qui délèguent la gestion de leur passerelle à l'un de leurs enfants qui a pu souscrire par ailleurs au service de gestion de sa propre passerelle.

Selon d'autres modes de réalisation, l'adresse de contact peut être une adresse d'enregistrement AoR (*Adress of Record*) SIP (*Session Initiation Protocol*)*,* un identifiant de ressource URI (*Uniform Resource Identifier*).

La configuration du gabarit de filtrage consiste à configurer des filtres pour l'envoi d'une ou plusieurs notifications lorsque le flux correspond à un des filtres configurés. Ces filtres correspondent donc à des flux/événements a priori suspects par rapport aux habitudes d'utilisation de la passerelle par le client.

Selon un mode de réalisation, la technologie USSD (*Unstructured Supplementary Service Data*) est utilisée pour la configuration du gabarit de filtrage et d'instructions régissant le service pour l'envoi d'une notification. La technologie USSD a l'avantage de s'affranchir d'une connexion directe à la passerelle. Le fournisseur de service peut déployer un portail captif pour configurer des alertes. Ce portail peut être accessible depuis la page d'accueil du compte utilisateur protégée typiquement par un login et un mot de passe, ou depuis une interface de gestion locale au CPE. Un compte utilisateur peut être par exemple un portail Web où un utilisateur peut accéder à la gestion des services souscrits ou offerts par son fournisseur. La configuration des filtres de notification peut suivre un mode suggéré par défaut (i.e. les règles de filtrage sont recommandées et définies à l'avance par l'opérateur), un mode personnalisé (c'est-à-dire, les règles sont définies par le client lui-même) ou un mode hybride qui combine les deux modes précédents. La configuration peut proposer des choix sur la manière dont les notifications sont envoyées vers un identifiant de contact : de façon immédiate, en groupant plusieurs notifications relatives à un même événement, de façon synthétique ou détaillée, etc. Cette préférence est prise en compte pour générer les sollicitations vers le client quand un incident a été observé. Les filtres peuvent être activés dans la passerelle, ou dans un ou plusieurs éléments du réseau.

Les évènements suivants dont la liste n'est pas exhaustive peuvent ainsi faire l'objet de la configuration d'un filtre :
- mise à jour du logiciel (firmware) de la passerelle,
- modification de(s) serveur(s) DNS,
- modification de(s) serveur(s) dynDNS (*Dynamic DNS*)*,*
- modification d'un serveur NTP (*Network Time Protocol*),
- activation d'un serveur FTP (*File Transfer Protocol*),
- modification (ajout/suppression) de règle du pare-feu de la passerelle,
- attachement d'un nouveau terminal à la passerelle,
- trafic non conforme à un profil normal : une machine qui envoie du trafic UDP vers un port connu pour être suspect (« 0 », « 443 », etc.),
- connexions à la passerelle depuis Internet.

La détection localement par la passerelle ou à distance par le réseau d'un ou de plusieurs de ces événements déclenche une notification à destination d'une adresse de contact.

Selon un mode d'implémentation, la notification est faite au moyen d'un message SMS de sollicitation illustré par la figure 5. Selon un premier mode de réalisation, la passerelle CPE est connectée au réseau mobile. La détection d'un événement *Event* déclenche l'envoi du message SMS via la connexion radio vers l'adresse de contact du client CLI. Le chemin de transfert du message de sollicitation et celui utilisé pour communiquer la décision du client peuvent être symétriques ou asymétriques. La passerelle est en charge des tâches suivantes :
- activation/désactivation et configuration des filtres d'envoi de notifications,
- prise de décision quand une notification doit être envoyée vers une adresse de contact,
- validation des instructions reçues du client,
- exécution des actions reçues.

Selon un autre mode de réalisation illustré par la figure 6, la passerelle CPE s'interface avec un ou des serveur(s) localisé(s) dans le réseau NW qui hébergent les fonctions de l'entité ECIMP. Lorsque la passerelle détecte *Event* un flux anormal, l'entité ECIMP est responsable de relayer des notifications *NOTIF* en provenance de la passerelle en transmettant des messages SMS *NOTIF* via SMS. L'entité ECIMP est également responsable de relayer des décisions *SMS DECI* reçues via SMS vers la passerelle sous la forme de messages *POLICY* afin que la passerelle puisse exécuter des actions correctives. A réception du retour *SMS DECI* du client, l'entité ECIMP peut envoyer un message de confirmation au client (ACK). En parallèle, l'entité ECIMP peut exécuter des actions (par exemple, modifier des règles de filtrage dans un pare-feu réseau) localement, dans un ou plusieurs éléments du réseau, et/ou générer des commandes vers la passerelle CPE à l'aide de la primitive *POLICY.*

Les fonctions ECIMP sont embarquées dans des nœuds du réseau. Le plus simple est d'embarquer ces fonctions ECIMP dans l'équipement d'accès au réseau IP le plus proche de la passerelle tel qu'un BRAS (Broadband Remote Access Server) dans le cas de connexions ADSL ou tel qu'un OLT (Optical Line Termination) dans le cas de connexions FFTH. La passerelle est responsable des tâches suivantes :
- configuration et activation de filtres d'envoi de notifications,
- prise de décision quand une notification doit être envoyée vers l'entité ECIMP (il s'agit de la décision d'envoyer une notification vers ECIMP. Cette décision est prise par le CPE selon l'événement constaté et qui correspond à l'une des règles configurées dans le gabarit de filtrage),
- validation et exécution des actions demandées par l'entité ECIMP (il s'agit par exemple de l'acquittement explicite ou non (par ex. «bloquer») de la réception de la ou les instructions véhiculée(s) dans le message POLICY transmis par l'entité ECIMP puis de l'exécution de cette ou ces instructions).

L'entité ECIMP est responsable des tâches suivantes :
- activation et configuration de filtres d'envoi de notification,
- prise de décision quand une notification doit être envoyée vers une adresse de contact,
- validation des instructions reçues du client (par exemple, s'assurer que l'instruction reçue du client a été proposée dans une liste de choix envoyée au préalable au client),
- exécution des actions reçues et relayage de certaines de ces actions vers la passerelle.

Certains filtres définis par l'utilisateur peuvent être exécutés par la passerelle elle-même. Certains filtres peuvent être exécutés par l'entité ECIMP mais cette entité peut aussi interagir avec d'autres éléments du réseau de l'opérateur pour mettre en place ces filtres. Par exemple, l'entité ECIMP peut utiliser les ressources des protocoles NETCONF (*Network Configuration Protocol*), IPFIX (*IP Flow Information Export*), SYSLOG, ou encore SNMP (*Simple Network Management Protocol*), pour la configuration de certains filtres ou la réception de notifications.

Selon un mode de réalisation illustré par la figure 7, le flux anormal *Event* est détecté par un filtre configuré dans un serveur du réseau NW qui héberge une ou plusieurs fonctions de l'entité ECIMP. Dans ce cas, l'entité ECIMP notifie le client au moyen d'un message *SMS NOTIF* via SMS. Elle relaye éventuellement vers la passerelle les décisions *SMS DECI* reçues via SMS sous la forme de messages *POLICY* afin que la passerelle puisse exécuter certaines actions correctives. La passerelle est donc adaptée pour recevoir des messages *POLICY* en l'absence de détection par elle-même de flux suspect.

La décision d'envoyer une notification vers une adresse de contact est prise par l'entité ECIMP sur la base des notifications reçues depuis la passerelle et éventuellement de notifications reçues depuis des nœuds du réseau qui interviennent dans le filtrage selon le gabarit déterminé. Les notifications envoyées par la passerelle à l'entité ECIMP ne résultent pas systématiquement en l'envoi de notifications via des messages SMS vers l'adresse de contact du client. Cette décision est du ressort de l'entité ECIMP. Typiquement, l'entité ECIMP peut décider si la notification reçue est « normale » (par exemple, correspond à une mise à jour logicielle de la passerelle pilotée par le fournisseur d'accès) et peut décider si des actions côté réseau sont suffisantes pour résoudre l'incident détecté. Cette intelligence sélective a pour but de ne pas surcharger le client avec des notifications inutiles. Le niveau de granularité des notifications peut être défini par chaque fournisseur de service ou éventuellement par le client lui-même.

Selon un mode de réalisation, la notification est structurée comme suit : {Evénement, [Risques associées], Action requise=Oui/Non, Action = Confirmer/Infirmer/Bloquer/Autoriser/.., ...}. En plus de l'événement objet de la notification et des propositions d'actions, le message de notification peut éventuellement inclure les risques de sécurité liés à l'événement ainsi que d'autres informations.

La notification peut être réalisée par l'envoi d'un ou plusieurs messages SMS. Typiquement, pour un incident donné, un message SMS dédié peut décrire les risques liés à cet incident alors qu'un message SMS distinct peut être envoyé pour inviter le client à prendre une décision.

Lorsque plusieurs adresses de contact ont été configurées, le procédé peut contacter séquentiellement ou simultanément le client en utilisant ces adresses.

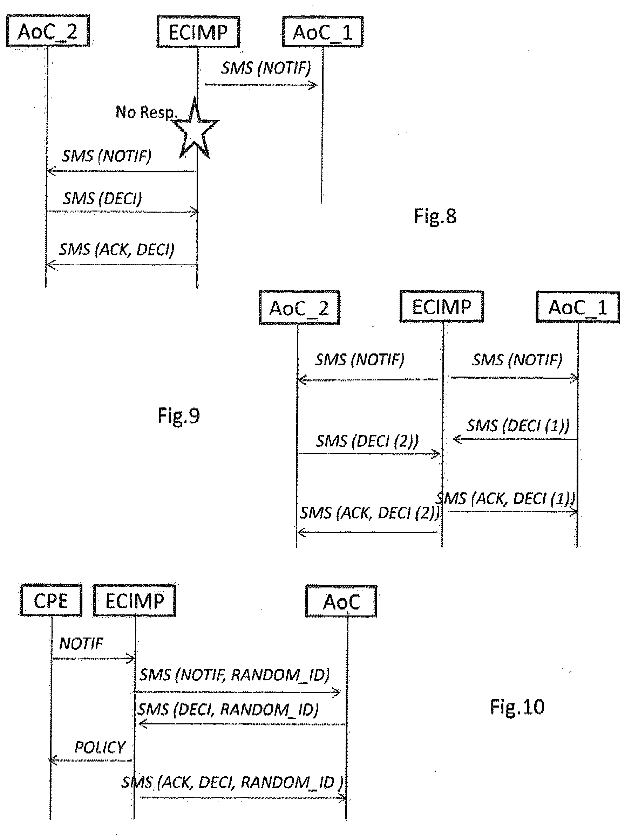

Selon un exemple illustré par la figure 8, l'entité ECIMP notifie au moyen d'un message *SMS NOTIF* une première adresse AoC_1. Si aucune décision n'a été reçue de la part de cette adresse après un certain temps éventuellement configurable, le message de notification est envoyé à une autre adresse de contact AoC_2. L'entité ECIMP réitère cette procédure jusqu'à ce qu'une réponse soit reçue de l'une des adresses de contact de la liste ou si un nombre maximum d'envoi de messages de notification a été atteint. Si aucune réponse n'a été reçue, l'entité ECIMP peut éventuellement prendre une décision au bénéfice du client et lui rendre compte du résultat de l'application de cette décision. Par exemple, la détection de messages ICMPv6 (*Internet Control Message Protocol, version 6)* émis sur n'importe quel numéro de port compris entre 5 et 99 et reçus sur l'interface de raccordement de la passerelle au réseau doit rapidement conduire l'entité ECIMP à vérifier que le pare-feu installé dans la passerelle est correctement configuré pour filtrer ces messages ou pour mettre à jour la configuration du pare-feu pour qu'il filtre ces messages dans les meilleurs délais.

Selon un exemple illustré par la figure 9, l'entité ECIMP notifie simultanément plusieurs adresses de contact AoC_1, AoC_2 de la liste des adresses configurées.

En cas de conflit entre les décisions communiquées depuis différentes adresses de contact, l'entité ECIMP sélectionne la décision à prendre en compte selon une logique définie. Par exemple, l'entité ECIMP retient la décision communiquée par le numéro ayant une haute priorité selon un ordre de préférence déjà renseigné par le client. De manière alternative, l'entité ECIMP retient la première décision dans l'ordre de réception des réponses. Quelle que soit la logique de décision retenue par l'entité ECIMP, un message de notification *SMS (ACK, DECI..)* contenant la décision retenue par l'entité ECIMP est envoyé à toutes les adresses ayant répondu à la sollicitation. Le client peut déléguer la prise de décision à l'opérateur de service. Dans ce cas, l'entité ECIMP décide des actions adéquates selon l'incident observé.

Selon un exemple illustré par la figure 10, une clé doit être utilisée pour sécuriser les échanges. Le message de notification inclut une clé unique *RANDOM_ID* qui doit être retournée dans la réponse. Cette clé doit être générée d'une manière aléatoire par l'entité ECIMP. A noter que la clé peut aussi être générée par la passerelle CPE. La réponse reçue du client doit inclure la clé communiquée dans le message de sollicitation correspondant ; la réponse est ignorée dans le cas contraire. L'exemple de la figure 10 illustre le déroulement quand la réponse reçue de l'adresse de contact AoC contient une clé valide. Une décision est alors relayée vers la passerelle CPE pour l'exécution d'une ou plusieurs actions adéquates.

Dans le cas où une clé erronée (incluant l'absence de clé) n'est renvoyée par l'adresse de contact AoC alors un message de notification est renvoyé par l'entité ECIMP vers l'adresse de contact AoC. Aucune décision n'est relayée vers la passerelle CPE tant qu'une clé valide n'est pas reçue depuis l'adresse de contact AoC.

La nature asynchrone de l'envoi de messages SMS peut être inappropriée en cas d'urgence, par exemple lorsqu'un un trafic important reçu par la passerelle suggère une attaque de déni de service.

Selon un mode de réalisation approprié en cas d'urgence, l'entité ECIMP décide d'établir une communication média (par ex, voix, visio, c'est-à-dire temps réel) avec le client en mode synchrone de manière automatique. A titre d'exemple illustré par la figure 11, l'entité ECIMP (ou un serveur média dédié) initialise une session VoLTE vers une adresse de contact du client. Une fois la communication établie, la notification est synthétisée en audio. Le client est ensuite invité à communiquer sa décision selon le même média audio ou selon un autre média (DMTF, ...).

La passerelle résidentielle qui reçoit un message POLICY procède à l'exécution des actions correspondantes. Un rapport d'exécution de ces actions peut éventuellement être envoyé à l'entité ECIMP. Un message POLICY peut inclure un ou plusieurs actions à effectuer. Un ou plusieurs messages POLICY peuvent être envoyés pour ordonner à la passerelle d'exécuter plusieurs actions. Ainsi, le message POLICY peut être utilisé pour communiquer à la passerelle de nouveaux filtres de notification, pour supprimer ou pour modifier des filtres existants, etc.

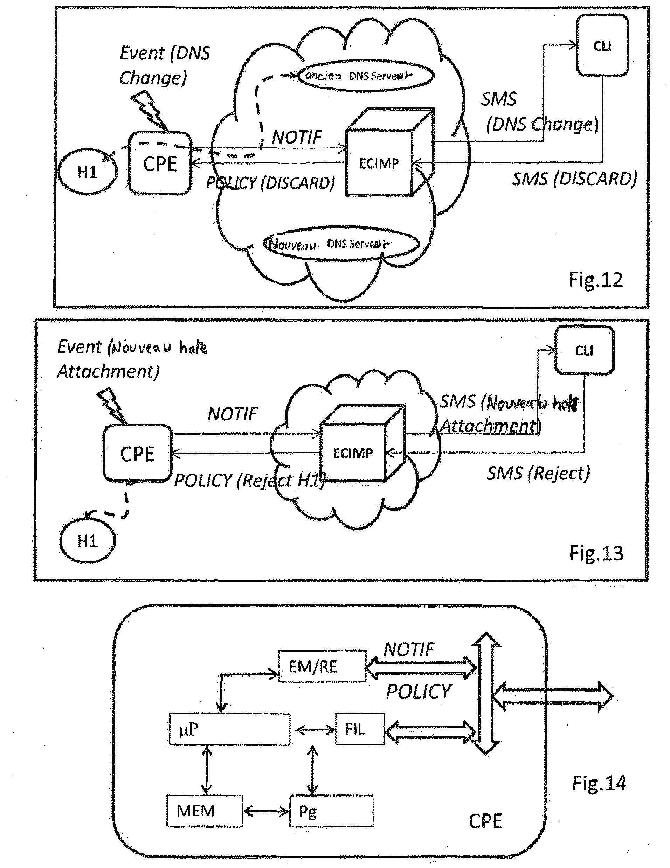

Un exemple de détection d'un événement pouvant correspondre à une tentative de détournement des flux d'un client par un attaquant est illustré par la figure 12. Quand la passerelle CPE détecte la modification des informations de configuration d'un serveur DNS (même depuis une interface de gestion de la passerelle représentée en traits pointillés), elle notifie *NOTIF* l'entité ECIMP pour l'informer. L'entité ECIMP notifie ensuite le client CLI via un message *SMS (DNS CHANGE)* lui indiquant que son serveur DNS a été changé. Le message détaille le cas échéant les risques de sécurité associés. Si le client n'est pas à l'origine de cette modification, il répond avec une instruction *SMS (DISCARD)* pour demander à l'entité ECIMP d'annuler cette modification des informations de configuration du serveur DNS. Un message *POLICY est* ensuite envoyé par l'entité ECIMP pour demander à la passerelle CPE de mettre à jour sa configuration DNS. Le message *POLICY (DISCARD)* inclut les informations nécessaires pour exécuter l'action par la passerelle. Grâce à cette procédure, le trafic de ce client n'est pas détourné par un attaquant.

Un exemple de tentative d'intrusion à partir d'un terminal est illustré par la figure 13. Quand la passerelle CPE détecte l'attachement ou tentative d'attachement au réseau local du client d'un nouveau terminal H1, la passerelle notifie *NOTIF* l'entité ECIMP pour l'informer. L'entité ECIMP notifie ensuite le client CLI via un message *SMS (New Host Attachement)* lui indiquant qu'un terminal H1 s'est connecté à sa passerelle CPE. Le message *SMS (New Host Attachement)* détaille le cas échéant les risques de sécurité associés. Si le client CLI ne veut pas autoriser cet attachement, il répond avec une instruction *SMS (Reject)* pour demander à l'entité ECIMP de bloquer ou de refuser l'accès réseau à ce terminal H1. Un message *POLICY (Reject H1)* est ensuite envoyé par l'entité ECIMP à la passerelle CPE pour lui demander de mettre fin à cette connexion réseau. Le message *POLICY (Reject H1)* inclut les informations nécessaires pour exécuter l'action par la passerelle CPE (par exemple, l'adresse MAC (Medium Access Control) de H1). Grâce à cette procédure, seuls les terminaux habilités à se connecter à la passerelle CPE sont autorisés.

Le client peut activer/désactiver le procédé de contrôle (ou la suspendre) à tout moment (ON/OFF). Quand le procédé est suspendu, les messages de notification ne sont plus envoyés vers aucune des adresses de contact bien que le filtrage puisse être actif. L'accès à la fonction d'activation/désactivation doit être fiable pour éviter une utilisation frauduleuse de la procédure par un attaquant. Selon un exemple d'implémentation cette fonction est sécurisée par des considérations administratives (mot de passe).

En outre, le client peut ajouter ou supprimer une nouvelle adresse de contact à tout moment.

La figure 14 illustre la structure simplifiée d'une passerelle CPE résidentielle mettant en œuvre un procédé de contrôle dynamique et interactif de la passerelle selon l'un des modes de réalisation décrits ci-dessus.

La passerelle CPE selon un mode de réalisation de l'invention comprend une mémoire MEM comprenant par exemple une mémoire tampon (RAM), une unité de traitement µP équipée par exemple d'un processeur et pilotée par un programme d'ordinateur Pg mettant en œuvre le procédé de contrôle dynamique et interactif de la passerelle.

A l'initialisation, les instructions de code du programme d'ordinateur Pg sont par exemple chargées dans la mémoire tampon (RAM) avant d'être exécutées par le processeur de l'unité de traitement µP. Le microprocesseur de l'unité de traitement µP met en œuvre les étapes du procédé de contrôle dynamique et interactif de la passerelle selon les instructions du programme d'ordinateur Pg pour exécuter par l'unité de traitement µP une action corrective de la configuration de la passerelle.

A cette fin, la passerelle comprend en outre des filtres FIL configurables, des moyens EM/RE d'envoi d'une notification *NOTIF* et des moyens de réception EM/RE d'un message d'action *POLICY.*

Ces moyens sont pilotés par le microprocesseur de l'unité de traitement µP.

## Revendications

1. Procédé (1) de contrôle dynamique et interactif d'une passerelle résidentielle (CPE) connectée à un réseau (AN) de communication **caractérisé en ce que** le procédé comprend :
- filtrage (3) des flux entrants et sortants de la passerelle résidentielle pour détecter un flux conforme à un gabarit de filtrage compris dans une configuration associée à la passerelle,
- en cas d'un flux conforme au gabarit de filtrage, déclencher un envoi d'une première notification (*NOTIF*) vers au moins une première adresse de contact (AoC) et
- actionner (5) une mesure corrective (*POLICY*) de la configuration de la passerelle résidentielle si une décision (*DECI*) est reçue depuis une deuxième adresse de contact suite à l'envoi de la notification, la première et la deuxième adresses de contact étant comprises dans la configuration associée à la passerelle et faisant partie d'adresses de contact déclarées par un client connu d'un compte utilisateur de la passerelle.

2. Procédé de contrôle dynamique et interactif selon la revendication 1, selon lequel l'envoi d'une notification est effectué vers plusieurs adresses de contact associées à la passerelle.

3. Procédé de contrôle dynamique et interactif selon la revendication 1 ou 2, selon lequel après un temps déterminé après l'envoi de la notification le procédé comprend :
- actionner une mesure corrective d'une configuration de la passerelle résidentielle en fonction du flux non conforme détecté.

4. Procédé de contrôle dynamique et interactif selon l'une des revendications 1 à 3, comprenant en outre :
- activation ou désactivation de l'envoi de la notification sous contrôle d'une entrée d'un utilisateur authentifié.

5. Procédé de contrôle dynamique et interactif selon l'une des revendications 1 à 4, selon lequel la configuration du filtrage et l'envoi des notifications sont mis en œuvre avec des commandes temps réel.

6. Procédé de contrôle dynamique et interactif selon l'une des revendications 1 à 4, selon lequel l'envoi de notification est effectué avec un ou plusieurs messages courts dits SMS ou MMS.

7. Passerelle résidentielle (CPE) destinée à être connectée à un réseau de communication, **caractérisé en ce qu'**elle comprend :
- des filtres (FIL) configurables pour filtrer des flux entrants et des flux sortants de la passerelle,
- des moyens (EM/RE) d'envoi d'une notification *(NOTIF)* vers au moins une première adresse de contact (AoC) si au moins un flux correspond à au moins l'un des filtres,
- des moyens (EM/RE) de réception d'un message d'action (*POLICY*) décrivant au moins une action corrective à effectuer par ladite passerelle résidentielle, le message d'action étant reçu depuis une deuxième adresse de contact et
- des moyens (µP) d'exécution de l'action corrective, la première et la deuxième adresses de contact étant comprises dans la configuration associée à la passerelle et faisant partie d'adresses de contact déclarées par un client connu d'un compte utilisateur de la passerelle.

8. Système comprenant un réseau (NW) de communication et la passerelle résidentielle (CPE) selon la revendication 7.

9. Système de communication pour le contrôle dynamique et interactif d'une passerelle résidentielle (CPE), selon la revendication 8, le réseau (NW) de communication comprenant un serveur, le serveur comprend des filtres configurés selon un gabarit de filtrage compris dans une configuration associée à la passerelle pour filtrer des flux entrants et sortants de la passerelle résidentielle.

10. Programme d'ordinateur comportant des instructions pour la mise en œuvre d'un procédé selon l'une quelconque des revendications 1 à 6 lorsque ce programme est exécuté par un processeur.

## Patentansprüche

1. Verfahren (1) zur dynamischen und interaktiven Steuerung eines Residential Gateways (CPE), der mit einem Kommunikationsnetz (AN) verbunden ist, **dadurch gekennzeichnet, dass** das Verfahren Folgendes umfasst:
- Filtern (3) ein- und ausgehender Ströme des Residential Gateways zur Erfassung eines Stroms, der mit einer Filterungsschablone übereinstimmt, die in einer Konfiguration enthalten ist, die dem Gateway zugeordnet ist,
- im Fall eines Stroms, der mit der Filterungsschablone übereinstimmt, Auslösen einer Sendung einer ersten Benachrichtigung *(NOTIF)* an mindestens eine erste Kontaktadresse (AoC) und
- Durchführen (5) einer Korrekturmaßnahme *(POLICY)* der Konfiguration des Residential Gateways, wenn eine Entscheidung (*DECI*) von einer zweiten Kontaktadresse nach der Sendung der Benachrichtigung empfangen wird, wobei die erste und die zweite Kontaktadresse in der Konfiguration enthalten sind, die dem Gateway zugeordnet ist, und zu Kontaktadressen gehören, die von einem bekannten Client eines Benutzerkontos des Gateways angegeben werden.

2. Verfahren zur dynamischen und interaktiven Steuerung nach Anspruch 1, wobei die Sendung einer Benachrichtigung an mehrere Kontaktadressen durchgeführt wird, die dem Gateway zugeordnet sind.

3. Verfahren zur dynamischen und interaktiven Steuerung nach Anspruch 1 oder 2, wobei nach einer bestimmten Zeit nach der Sendung der Benachrichtigung das Verfahren Folgendes umfasst:
- Durchführen einer Korrekturmaßnahme einer Konfiguration des Residential Gateways in Abhängigkeit vom erfassten nicht übereinstimmenden Strom.

4. Verfahren zur dynamischen und interaktiven Steuerung nach einem der Ansprüche 1 bis 3, ferner umfassend:
- Aktivieren oder Deaktivieren der Sendung der Benachrichtigung unter Steuerung einer Eingabe eines authentifizierten Benutzers.

5. Verfahren zur dynamischen und interaktiven Steuerung nach einem der Ansprüche 1 bis 4, wobei die Konfiguration der Filterung und die Sendung der Benachrichtigungen mit Echtzeitbefehlen durchgeführt werden.

6. Verfahren zur dynamischen und interaktiven Steuerung nach einem der Ansprüche 1 bis 4, wobei die Sendung der Benachrichtigungen mit einem oder mehreren Kurznachrichten, SMS oder MMS, durchgeführt wird.

7. Residential Gateway (CPE) zur Verbindung mit einem Kommunikationsnetz, **dadurch gekennzeichnet, dass** er Folgendes umfasst:
- konfigurierbare Filter (FIL) zur Filterung der eingehenden Ströme und der ausgehenden Ströme des Gateways,
- Mittel zur Sendung (EM/RE) einer Benachrichtigung *(NOTIF)* an mindestens eine erste Kontaktadresse (AoC), wenn mindestens ein Strom mindestens einem der Filter entspricht,
- Mittel (EM/RE) zum Empfang einer Aktionsnachricht *(POLICY),* die mindestens eine Korrekturaktion beschreibt, die von dem Residential Gateway durchzuführen ist, wobei die Aktionsnachricht von einer zweiten Kontaktadresse empfangen wird, und
- Mittel (µP) zur Ausführung der Korrekturaktion, wobei die erste und die zweite Kontaktadresse in der Konfiguration enthalten sind, die dem Gateway zugeordnet ist, und zu Kontaktadressen gehören, die von einem bekannten Client eines Benutzerkontos des Gateways angegeben werden.

8. System umfassend ein Kommunikationsnetz (NW) und den Residential Gateway (CPE) nach Anspruch 7.

9. Kommunikationssystem zur dynamischen und interaktiven Steuerung eines Residential Gateways (CPE) nach Anspruch 8, wobei das Kommunikationsnetz (NW) einen Server umfasst, der Server Filter umfasst, die gemäß einer Filterungsschablone konfiguriert sind, die in einer Konfiguration enthalten ist, die dem Gateway zugeordnet ist, um ein- und ausgehende Ströme des Residential Gateways zu filtern.

10. Computerprogramm aufweisend Anweisungen für die Durchführung eines Verfahrens nach einem der Ansprüche 1 bis 6, wenn dieses Programm von einem Prozessor ausgeführt wird.

## Claims

1. Method (1) for the dynamic and interactive control of a home gateway (CPE) connected to a communication network (AN), **characterized in that** the method comprises:
- filtering (3) the incoming and outgoing streams entering and exiting the home gateway so as to detect a stream compliant with a filtering template contained in a configuration associated with the gateway,
- in case of a stream compliant with the filtering template, triggering sending of a first notification (*NOTIF*) to at least one first contact address (AoC) and
- actuating (5) a corrective measure (*POLICY*) in respect of the configuration of the home gateway if a decision (*DECI*) is received from a second contact address following the sending of the notification, the first and second contact addresses being contained in the configuration associated with the gateway and forming part of the contact addresses declared by a known client of a user account of the gateway.

2. Method for dynamic and interactive control according to Claim 1, wherein a notification is sent to several contact addresses associated with the gateway.

3. Method for dynamic and interactive control according to Claim 1 or 2, wherein, after a given time after the sending of the notification, the method comprises:
- actuating a corrective measure in respect of a configuration of the home gateway as a function of the non-compliant stream detected.

4. Method for dynamic and interactive control according to one of Claims 1 to 3, furthermore comprising:
- activating or deactivating the sending of the notification under control of an input from an authenticated user.

5. Method for dynamic and interactive control according to one of Claims 1 to 4, wherein the configuration of the filtering and the sending of the notifications are implemented with real-time commands.

6. Method for dynamic and interactive control according to one of Claims 1 to 4, wherein the notification is sent using one or more so-called SMS or MMS short messages.

7. Home gateway (CPE) intended to be connected to a communication network, **characterized in that** it comprises:
- configurable filters (FIL) for filtering incoming streams and outgoing streams entering and exiting the gateway,
- means (EM/RE) for sending a notification (*NOTIF*) to at least one first contact address (AoC) if at least one stream corresponds to at least one of the filters,
- means (EM/RE) for receiving an action message (*POLICY*) describing at least one corrective action to be performed by said home gateway, said action message being received from a second contact address, and
- means (µP) for executing the corrective action, the first and second contact addresses being contained in the configuration associated with the gateway and forming part of the contact addresses declared by a known client of a user account of the gateway.

8. System comprising a communication network (NW) and the home gateway (CPE) according to Claim 7.

9. Communication system for the dynamic and interactive control of a home gateway (CPE) according to Claim 8, the communication network (NW) comprising a server, the server comprising filters configured according to a filtering template contained in a configuration associated with the gateway for filtering incoming and outgoing streams entering and exiting the home gateway.

10. Computer program comprising instructions for the implementation of a method according to any one of Claims 1 to 6 when this program is executed by a processor.
